# EUROPEAN PATENT SPECIFICATION

(11) **EP 3 451 112 B1**
(45) Date of publication and mention of the grant of the patent: **27.01.2021**
(21) Application number: 18194150.1
(22) Date of filing: 16.02.2005
(51) Int. Cl.: G06F 1/00, H04N 1/44, H04N 1/32, H04N 1/00

(54) **MULTIFUNCTION APPARATUS**
MULTIFUNKTIONSVORRICHTUNG
APPAREIL MULTIFONCTION

(30) Priority: 25.02.2004 JP 2004050160
(43) Date of publication of application: 06.03.2019
(62) Divisional of application: 05003311.7
(73) Proprietor: Panasonic Corporation, Osaka 571-8501 (JP)
(72) Inventor: NISHIZAWA, Minoru, Osaka-shi, Osaka 540-6207 (JP); TAKAHASHI, Etsuro, Osaka-shi, Osaka 540-6207 (JP)
(74) Representative: Grünecker Patent- und Rechtsanwälte PartG mbB

(56) References cited:
- US-A- 5 999 766
- US-A1- 2003 105 849

## Description

### BACKGROUND OF THE INVENTION

### 1. Field of the Invention

The present invention relates to a multifunction apparatus that includes a plurality of functions including a copier function.

### 2. Description of Related Art

A multifunction apparatus having a plurality of functions such as printer, copier, scanner, facsimile, and e-mail functions has become common. In order to limit the use of such a multifunction apparatus, a method has been introduced that restricts the use of non-registered users by performing user authentication from the input of the user ID and password (e.g., Related Art 1). In addition, another method has been introduced in which one of the multifunction apparatus functions (e.g., facsimile relay function that converts an e-mail into a facsimile image) is limited by checking the domain of the e-mail sender and denying the use of the facsimile relay function if accessed by a non-registered domain (e.g., Related Art 2).
[Related Art 1] Japanese Patent Laid Open Application 2003-233725
[Related Art 2] Japanese Translation of PCT International Application H09-536037

However, the above methods have the following shortcomings. The authentication method that checks the user ID and password input can only be used for determining whether the multifunction apparatus itself can be used. In other words, the method could not be used for limiting each user to use certain functions among all functions included in the multifunction apparatus. In addition, the method that limits facsimile relay function (during the transmission) using the sender's domain name automatically terminates the transmission when the domain is not registered. Therefore, an apparatus has been needed that allows setup for individual user indicating whether a certain function can be used.

Patent application publication US 5 999 766 A describes a further image processing apparatus for storing and reading out image data. An authorization code inputting element reads in an authorization code from an authorization medium on which a particular authorization code is recorded and a user identification inputting element inputs user identification information including the individual user authorization number issued at the time of the user being registered. A user control element controls the users by the authorization code and the user identification information, and a function-limiting element limits the scope of functions that can be used by the user in case the user can not be identified by the inputted authorization code or the inputted user identification information.

### SUMMARY OF THE INVENTION

The present invention addresses the above-described problems. An object of the invention is to provide a multifunction apparatus, a method and a system that can set limits on the types of functions to be used for each user, the functions being included in the multifunction apparatus.

This object is solved by the present invention as claimed in the appended independent claims. Particular embodiments of the present invention are defined by the appended dependent claims.

Embodiments and/or examples mentioned in the following description that do not fall under the scope of the appended claims are to be construed as comparative examples useful for understanding the present invention

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a functional block diagram illustrating a multifunction apparatus according to an embodiment of the invention;
Fig. 2 illustrates registration information of a memory card that is readout/written-in by the multifunction apparatus according to the embodiment;
Fig. 3 is a data structure of a personal information table that is registered in a server (personal information server) connected to the multifunction apparatus according to the embodiment;
Fig. 4 illustrates an example of function limit information included in the personal information table that is registered in the server (personal information server) connected to the multifunction apparatus according to the embodiment;
Fig. 5 is a flowchart illustrating a process when a user specifies an operation on the multifunction apparatus according to the embodiment;
Fig. 6 is a flowchart illustrating a process when a user specifies an operation on the multifunction apparatus according to the embodiment;
Fig. 7 is a functional block diagram of the server connected to the multifunction apparatus according to the embodiment; and
Fig. 8 is a flowchart illustrating an operation of a personal authentication server connected to the multifunction apparatus according to the embodiment.

### DETAILED DESCRIPTION OF PREFERRED EMBODIMENTS

The embodiments of the present invention are explained in the following, in reference to the above-described drawings.

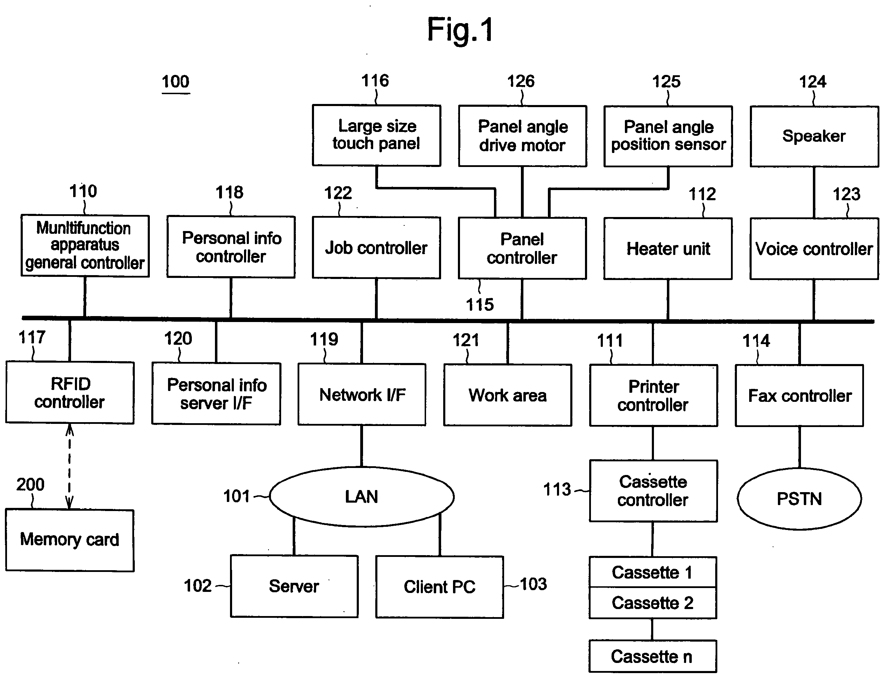

Fig. 1 is a functional block diagram of multifunction apparatus 100 according to an embodiment of the present invention. Fig. 1 also shows a portion of a network. Multifunction apparatus 100 can be connected to various servers 102 and client PCs 103, via LAN 101. Server 102 can be a personal information server that stores a personal information table and performs personal authentication and personal information distribution. Server 102 can also be a web server that executes a job selected from a menu in a remote procedure method. Although multifunction apparatus 100 includes printer, copier, scanner, facsimile, and e-mail functions, Fig.1 only shows blocks related to the printer and facsimile functions.

Multifunction apparatus general controller 110 controls the overall multifunction apparatus 100. Printer controller 111 executes a process that converts printout data (given from a client) into image data in a predetermined format. Printer controller 111 especially gives a warm up instruction to heater unit (fusing apparatus) 112 in an image generation unit (not shown in the figure), and gives a cassette selection instruction to cassette controller 113. Cassette controller 113 selects an indicated cassette from a plurality of vertically stacked cassettes (1) - (n), and feeds paper to the image generation unit. Fax controller 114 has a modem that is connected to a PSTN to execute steps for a facsimile communication. Panel controller 115 displays an operation screen and the like on large-size touch panel 116 and analyzes an operation input by the user from where the user touched on large-size touch panel 116 and from the displayed contents.

RFID controller 117 reads and writes data on memory card 200 using electromagnetic wave signals. When a magnetic field is applied to memory card 200 from RFID controller 117, the reflected electromagnetic wave includes effect (information) corresponding to the memory contents of memory card 200. RFID controller 117 detects the memory contents of memory card 200 using the reflected electromagnetic wave. Conversely, electromagnetic wave signals applied from RFID controller 117 to memory card 200 is used to write information because the signals have a magnetic influence on memory card 200. RFID controller 117 performs non-contact reading/writing of card registration data, via electromagnetic wave signals, from/into memory card in the detection area within about a 1-meter radius range.

Personal information controller 118 manages the write-in destination of the registration data, which is read from memory card 200. In addition, personal information controller 118 notifies RFID controller 117 of data to be written in memory card 200. Network I/F 119 is a section that interfaces with LAN 101. Personal information server I/F 120 executes a process for communicating with a personal information server among servers 102 on LAN 101. Work area 121 stores data received from memory card 200 and personal information server. Job controller 122 provides a command to an appropriate unit when a job is executed using a function such as copier, printer, facsimile, scanner, or e-mail functions.

Voice controller 123 stores voice data for a voice guidance. Upon receiving a voice guidance instruction (in synchronization with the user's operation) from panel controller 115 and job controller 122, voice controller 123 outputs the corresponding voice data to speaker 124. It is preferable that the voice guidance is voice data that assists the operation from the operation screen displayed on large-size touch panel 116. However, other forms of voice guidance can be output. Panel angle position sensor 125 detects an angle of large-size touch panel 116. Panel angle drive motor 126 receives a control signal from panel controller 115 and adjusts the angle of large-size touch panel 116. In this embodiment, the angel of large-size touch panel 116 can be adjusted. However, the touch panel angel can be at a fixed location.

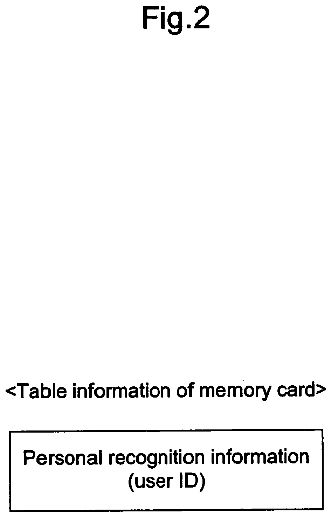

Fig. 2 illustrates the registration information of memory card 200.

As shown in the figure, memory card 200 stores only user ID as personal identification information. It is preferable to limit the registration information (of memory card 200) to user ID, and not to store other personal information, for security reasons. However, other personal information and/or group information can be stored.

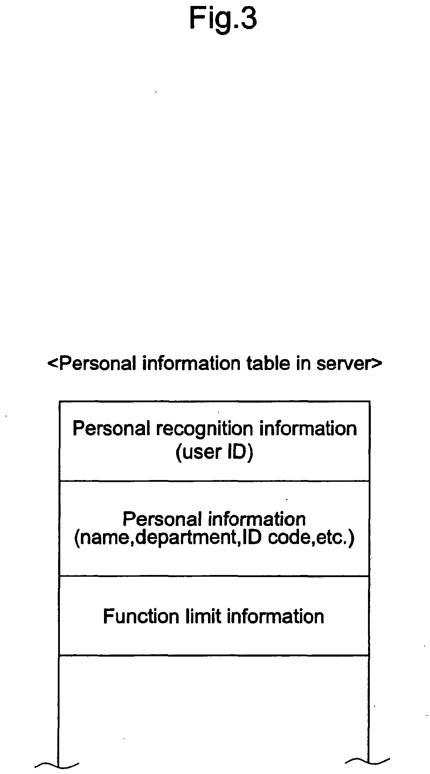

Fig. 3 illustrates a data structure of a personal information table that is registered in the personal information server (as server 102).

A personal information table is created for each registered user. As shown in Fig. 3, the personal information table includes a user ID (personal identification information), personal information such as a department name to which the user belongs, and function information that limits the use of the registered user (hereafter referred to as "function limit information").

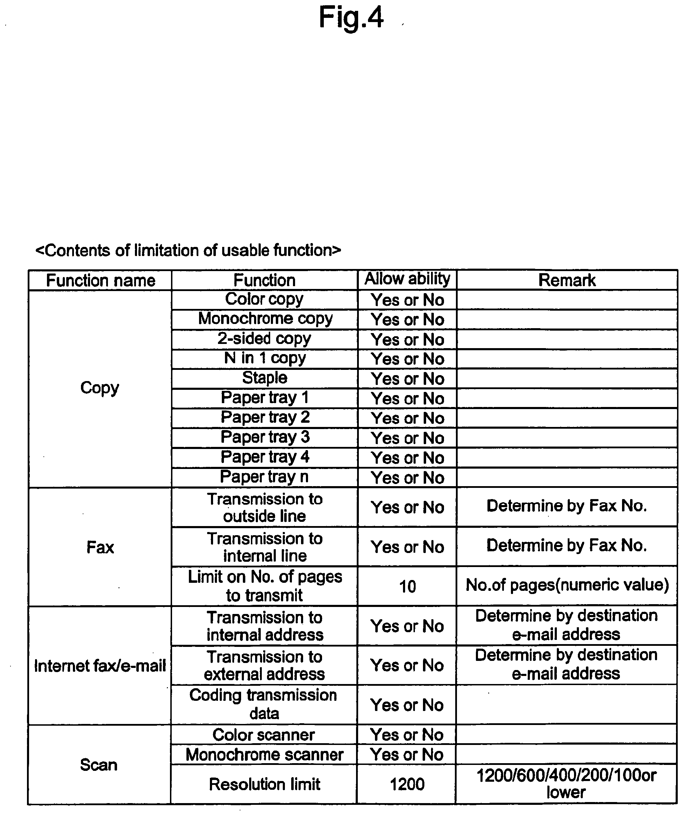

Fig. 4 illustrates an example of the function limit information within a personal information table.

As shown in Fig. 4, the function limit information includes a list of functions to which a user is/is not allowed to use, and information stating whether each function item of the list is allowed to the user ("allowability"). To be specific, the allowability and remark are registered corresponding to each item of the function list (function name and its function). In this embodiment, "copy", "fax", "Internet fax/e-mail", "scan" are registered as "function names". Each function name includes a plurality of functions that are registered. For example, function name "copy" includes registered functions such as "color copy", "monochrome copy", "paper tray", etc. When the use of a certain function is permitted, "yes" is set under "allowability" for the function. It is also possible to only allow a user to make a copy using recycled paper (e.g., using a back side of an already used sheet of paper) by setting a specific paper tray that carries such recycled paper. In addition, there are cases where a specific numeric value (e.g., number of sheet of paper) are set as "allowability" as shown in "limit on number of pages to transmit" in "fax" function name and "resolution limit" in "scan" function name. In "remark", criteria to be applied when determining the allowability can be registered, for example.

Accordingly, in multifunction apparatus 100 according to this embodiment, the function limit information includes a list of functions and the information stating whether each item of the function list is allowed. Therefore, it becomes easy to setup/check the allowability of each item of the function list. Especially, the function limit information includes a function list (limiting the use of the copy function and fax function) and allowability information (indicating whether each function use in the function list is allowed). Therefore, it is possible to easily setup/confirm the allowability for each function, in the function list that is related to copy and fax functions.

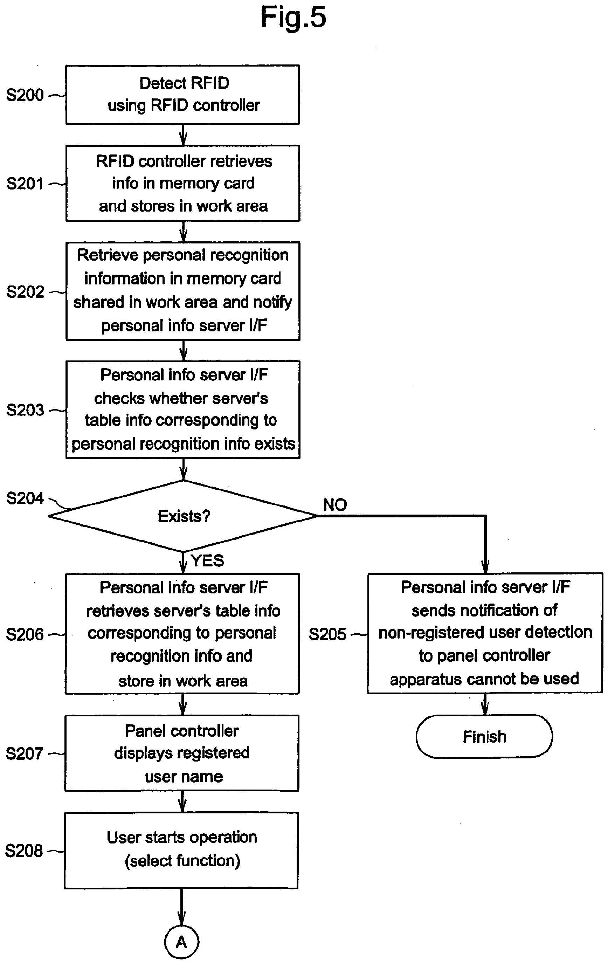

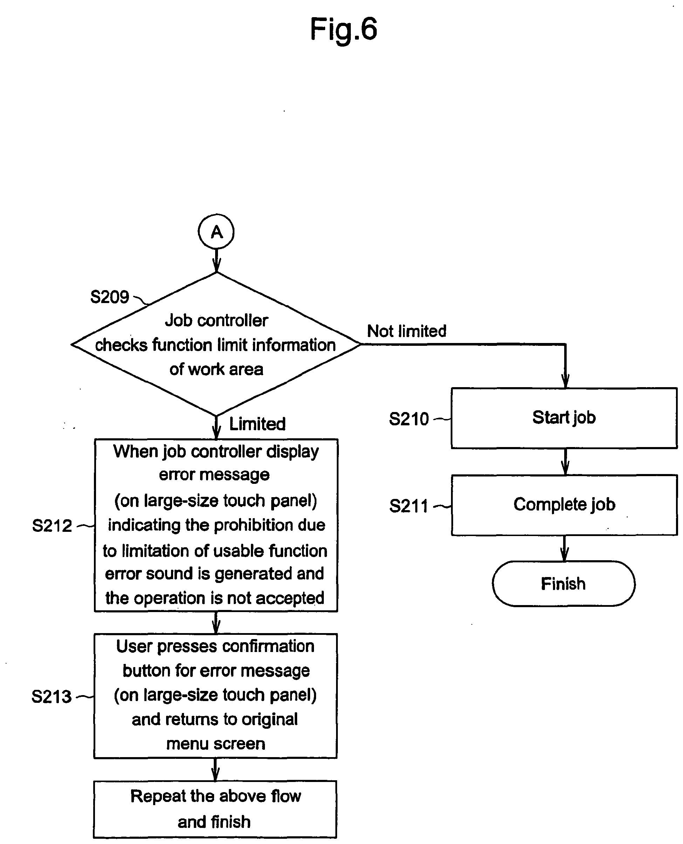

Next, Figs. 5 and 6 are used to illustrate an situation where the user instructs an operation to multifunction apparatus 100 according to the embodiment of the invention.

When a user (operator) having memory card 200 approaches multifunction apparatus 100, RFID controller 117 detects the user (S200). For example, memory card 200 having the personal identification information (user ID) is inserted into a employee badge holder carried by the user (e.g., a holder hanging from the user's neck). When the user carrying memory card 200 approaches the detection area of the RFID controller 117 (in this example, within about 1m range), RFID controller 117 scans the user ID in memory card 200 (S200).

RFID controller 117 stores the user ID scanned from the memory card 200 into work area 121 (S201). Multifunction apparatus general controller 110 retrieves the user ID stored in work area 121 and notifies personal information server I/F 120 via network I/F 119 (S202).

As described later, upon receiving the user ID, the personal information server (as server 102) checks whether a personal information table of the user having the scanned user ID is registered, and transmits data indicating whether such a table is registered.

Personal information server I/F 120 checks whether the user is registered in the personal information server, determining from the transmitted data indicating whether table is registered (S203). When the user's personal information table is not registered ("NO" at S204), personal information server I/F 120 outputs "notification of non-registered user detection" to panel controller 115. Upon receiving the "notification of non-registered user detection", a message stating that the apparatus cannot be used is displayed on large-size touch panel 116 (S205).

When the user's personal information table is registered ("YES" at S204), personal information server I/F 120 retrieves the personal information table data of the detected user from the personal information server, and stores the data in work area 121 (S206).

Panel controller 115 retrieves the detected user name from the personal information table data, the table data being stored in work area 121, and displays the name on large-size touch panel 116 as the person who has been allowed to use the apparatus (S207). For example, when the registered name in the personal information table is "Taro Matsushita", a text such as "Taro Matsushita is authenticated" is displayed.

Along with the detected user name, a menu screen is displayed. The menu screen displays various function buttons from which commands for multifunction apparatus 100 can be input. When the menu screen is displayed on large-size touch panel 116, the user starts the operation (S208). In particular, when the user presses a function button from large-size touch panel 116, an operation (e.g., color copy, fax transmission to an external line, etc.) is started.

When the operation is started, job controller 122 reads the function limit information within the user's personal information table (stored in work area 121) and checks whether the desired function (selected from the function button) is prohibited by the function limit information (S209). When the function is not prohibited by the function limit information, job controller 122 starts the job provided by the selected function (S210). When the job is complete (S211), the process is completed.

When the function is prohibited by the function limit information, job controller 122 outputs an "error notification" to panel controller 115 and voice controller 123, the notification indicating that the function use is prohibited by the function limit information. Upon receiving the "error notification", panel controller 115 displays, on large-size touch panel 116, an error message indicating that the function use is prohibited. Voice controller 123, upon receiving the "error notification", outputs an error sound from speaker 124. At this time, job controller 115 does not accept the function selected by the user (S212).

According to multifunction apparatus 100 of the present embodiment, when a prohibited function is selected by the user, large-size touch panel 116 displays an error message indicating that the function use is prohibited. Therefore, the user can recognize that the function use is prohibited thus take an appropriate measure.

The error message displayed on large-size touch panel 116 includes a confirmation button. The confirmation button can erase the error message and move back the control to S208. When an error message is displayed, the user usually presses the confirmation button to return to the original menu screen (S208) (S213). After repeating the above process, the job instructed by the user is completed (S211). Or, when the user gives up the intended operation, job controller 122 terminates the process.

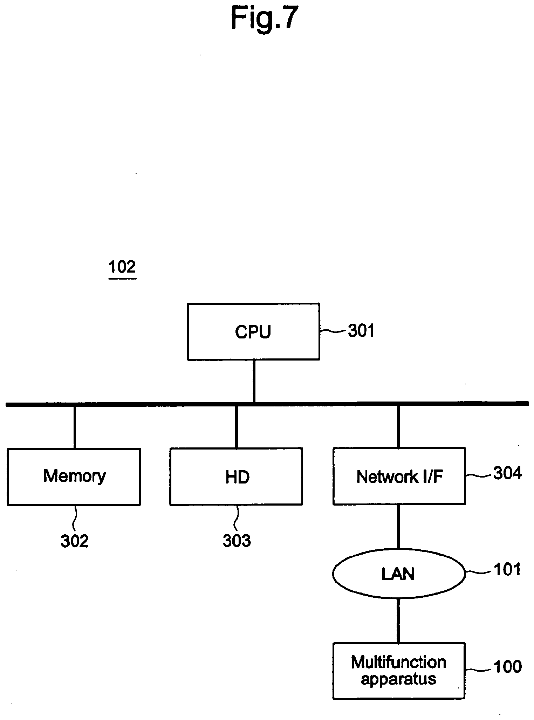

Fig. 7 is a functional block diagram of server 102 connected to multifunction apparatus 100, via LAN 101, according to the embodiment. Server 102 shown in Fig. 7 includes CPU 301 that controls the entire apparatus. Memory 302 stores control programs to be used by CPU 301 for controlling the entire apparatus, and has a function to perform as work memory of CPU 301. Hard disk (HD) 303 stores information to be distributed to multifunction apparatus 100 according to the present embodiment. For example, when server 102 functions as a server for personal information, the personal information table is stored for each registered user. When server 102 functions as a web server, server 102 stores menus for multifunction apparatus 100 and related jobs. Network interface (I/F) 304 interfaces with LAN 101.

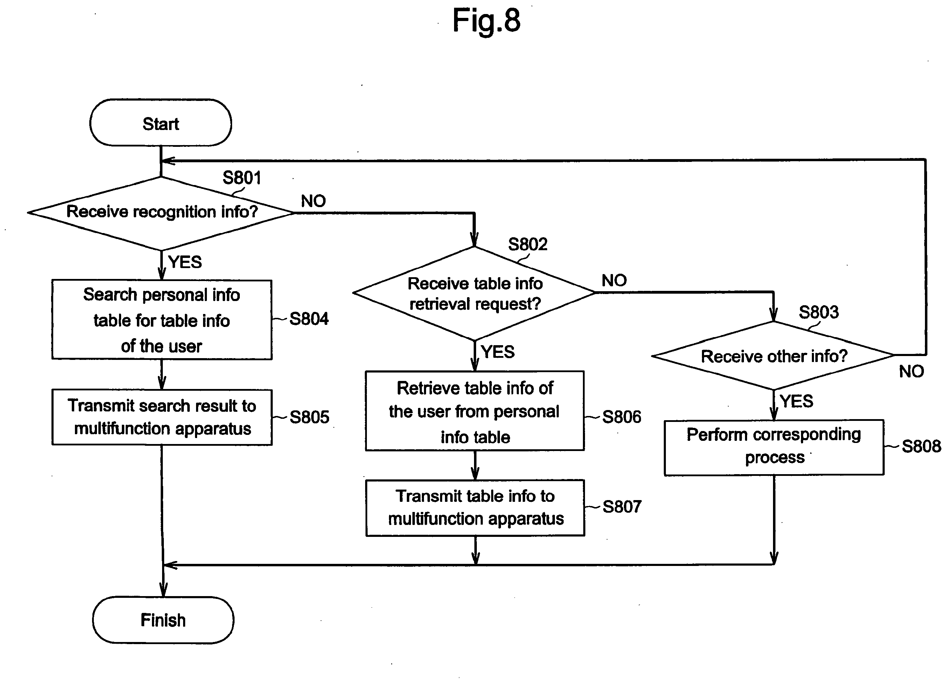

Fig. 8 illustrates an operation when server 102 having the above-described configuration functions as a personal authentication server.

Server 102 as a personal authentication server monitors, in an idle state, a reception of various information from multifunction apparatus 100 according to the present embodiment. In particular, server 102 monitors receptions of identification information (user ID) (ST 801), request to retrieve table information (ST 802), and other information (ST 803).

When identification information is received at ST 801, during the monitoring of receptions of various information, table information of the registered user is searched from the personal information table stored in HD 303 (ST 804). Accordingly, it is determined whether the received identification information is registered in the personal information table. Then, the result of the search (i.e., whether the identification information is registered) is transmitted to the accessing multifunction apparatus 100 (ST 805).

When a request to retrieve table information is received at ST 802, table information of the registered user is retrieved from the personal information table stored in HD 303 (ST 806). Accordingly, the table information of the registered user (associated with the previously received identification information) is retrieved. Then, the table information is transmitted to the accessing multifunction apparatus 100 (ST 807).

When other information is received at ST 803, a process required for the information is performed (ST 808). When various processes are completed at ST 805, ST 807, or ST 808, server 102 terminates the process. Accordingly, server 102 determines and executes the required process according to the information received from multifunction apparatus 100.

According to multifunction apparatus 100 of the present embodiment, function limit information that is preset for an authenticated user is retrieved from server 102 based on the personal identification information (user ID) read from memory card 200. Then, the function limit information is stored in work area 121 and used to limit usable functions for the authenticated user. Therefore, the limitation of usable functions of multifunction apparatus 100 can be easily set for each user. As a result, it is possible to avoid a situation where various functions of multifunction apparatus 100 are used by a user without limitation.

In particular, multifunction apparatus 100 according to the present embodiment stores personal information table in server 102, the table registering personal information. Also, multifunction apparatus 100 retrieves function limit information of a user from server 102, the information corresponding to the personal identification information read from memory card 200. Therefore, multifunction apparatus 100 does not have to register the personal information table within its own apparatus, thereby enabling multifunction apparatus 100 to limit the usable functions without having a large-memory hard disk.

In addition, the present embodiment illustrates a situation where server 102 (functioning as a personal information server) registers information such as personal information and function limit information, so that multifunction apparatus 100 retrieves the information (e.g., personal information) and stores the information in work area 121. However, the present invention is not limited to the above-described embodiment. For example, multifunction apparatus 100 can install a large memory apparatus (e.g., hard disk apparatus) where the personal information is registered and from which the information is retrieved. In this case, apparatus by itself can limit the usable functions of multifunction apparatus 100.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope of the present invention in its aspects. Although the present invention has been described herein with reference to particular structures, materials and embodiments, the present invention is not intended to be limited to the particulars disclosed herein; rather, the present invention extends to all functionally structures, methods and uses, such as are within the scope of the appended claims.

The present invention is not limited to the above described embodiments, and various variations and modifications may be possible without departing from the scope of the present invention.

This application is based on the Japanese Patent Application No. 2004-050160 filed on February 25, 2004.

## Claims

1. A multifunction apparatus (100) having a set of functions which includes at least one of copy, fax and internet fax/e-mail functions, comprising:
a user identifying information acquisition unit (117) that is adapted to acquire information for identifying and authenticating a user who operates the multifunction apparatus (100);
a function limitation unit (122) that is adapted to limit use, for an authenticated user, of the set of functions of the multifunction apparatus (100) based on the acquired user identifying information and function limit information which is preset for the authenticated user **characterized by**
wherein the function limit information preset for an authenticated user includes a list of function items associated with each function of said set of functions of the multifunction apparatus (100) and, for each function item in the list, information stating whether each function item is allowed for the authenticated user and setting a limit to the use of a function item for said authenticated user,
wherein the function items associated with the copy function include at least one of color copy, monochrome copy, and indication of a paper tray, and the function items associated with the fax function include a limit on the number of pages to transmit,
wherein the function items associated with the Internet fax/e-mail function includes transmission to an internal e-mail address and transmission to an external e-mail address, allowability of transmission to an internal e-mail address and/or an external e-mail address being determined based on the destination e-mail address, and
wherein the function limitation unit (122) is adapted to limit use of a function of the set of functions, for the authenticated user, by starting or prohibiting a job provided by a function item, which is selected by the authenticated user, according to the function limit information for the authenticated user.

2. The multifunction apparatus (100) according to claim 1, wherein
the multifunction apparatus (100) is further adapted to notify a server (120; 102) that stores user's function limit information for each registered user of the acquired user identifying information and to retrieve user's function limit information from the server (120; 102) based on the acquired user identifying information, and
the function limitation unit (122) is adapted to limit use of the set of functions of the multifunction apparatus (100) based on the retrieved user's function limit information.

3. The multifunction apparatus (100) according to claim 1 or 2, wherein the user identifying information unit (117) is adapted to transmit an electromagnetic wave signal to a card (200) carried by a user and is further adapted to communicate with the card (200) to acquire the information for identifying the user who carries the card (200) when the card (200) is within a detection area of the user identifying information unit (117).

4. The multifunction apparatus (100) according to claim 1, further comprising an output unit (116, 124) that is adapted to output, when a function item prohibited to be used in the function limit information is selected by the user, a message indicating that the function item is prohibited to be used.

5. A method of controlling a function of a multifunction apparatus (100) having a set of functions which includes at least one of copy, fax and internet fax/e-mail functions, the method comprising:
acquiring information for identifying and authenticating a user who operates the multifunction apparatus (100);
limiting use, for an authenticated user, of the set of functions of the multifunction apparatus (100) based on the acquired user identifying information and function limit information which is preset for the authenticated user **characterized by**
wherein the function limit information preset for an authenticated user includes a list of function items associated with each function of said set of functions of the multifunction apparatus and, for each function item in the list, information stating whether each function item is allowed for the authenticated user and setting a limit to the use of a function item for said authenticated user,
wherein the function items associated with the copy function include at least one of color copy, monochrome copy, and indication of a paper tray, and the function items associated with the fax function include a limit on the number of pages to transmit,
wherein the function items associated with the Internet fax/e-mail function includes transmission to an internal e-mail address and transmission to an external e-mail address, allowability of transmission to an internal e-mail address and/or an external e-mail address being determined based on the destination e-mail address, and
wherein limiting the use, for an authenticated user, of the set of functions of the multifunction apparatus (100) includes starting or prohibiting a job provided by a function item, which is selected by the authenticated user, according to the function limit information for the authenticated user.

6. The method according to claim 5, further comprising:
notifying a server (120; 102) that stores user's function limit information for each registered user of the acquired user identifying information, retrieving user's function limit information from the server (120; 102) based on the acquired user identifying information, and limiting use of the set of functions of the multifunction apparatus (100) based on the retrieved user's function limit information.

7. A system comprising a multifunction apparatus (100) having a set of functions which includes at least one of copy, fax and internet fax/e-mail functions and a card (200) carriable by a user, wherein
the card (200) is adapted to store information for identifying and authenticating the user who carries the card (200) readably by an electromagnetic wave signal, and
the multifunction apparatus (100) comprises:
a user identifying information acquisition unit (117) that is adapted to transmit the electromagnetic wave signal to the card (200) and is further adapted to communicate with the card (200) to acquire the information for identifying the user who carries the card (200) when the card (200) is within a detection area of the user identifying information unit (117);
the multifunction apparatus (100) further comprises:
a function limitation unit (122) that is adapted to limit use, for an authenticated user, of the set of functions of the multifunction apparatus (100) based on the acquired user identifying information and function limit information which is preset for the authenticated user;
**characterized in that** the function limit information preset for an authenticated user includes a list of function items associated with each function of said set of functions of the multifunction apparatus (100) and, for each function item in the list, information stating whether each function item is allowed for the authenticated user and setting a limit to the use of a function item for said authenticated user,
wherein the function items associated with the copy function include at least one of color copy, monochrome copy, and indication of a paper tray, and the function items associated with the fax function include a limit on the number of pages to transmit,
wherein the function items associated with the Internet fax/e-mail function includes transmission to an internal e-mail address and transmission to an external e-mail address, allowability of transmission to an internal e-mail address and/or an external e-mail address being determined based on the destination e-mail address, and
wherein the function limitation unit (122) is adapted to limit use of a function of the set of functions, for the authenticated user, by starting or prohibiting a job provided by a function item, which is selected by the authenticated user, according to the function limit information for the authenticated user.

8. The system according to claim 7, wherein
the multifunction apparatus (100) is further adapted to notify a server (120; 102) that stores user's function limit information for each registered user of the acquired user identifying information and to retrieve user's function limit information from the server (120; 102) based on the acquired user identifying information, and
the function limitation unit (122) is adapted to limit use of the set of functions of the multifunction apparatus (100) based on the retrieved user's function limit information.

## Patentansprüche

1. Multifunktionsvorrichtung (100) mit einer Gruppe von Funktionen, die Kopier-, Fax- oder/und Internet-Fax/E-Mail-Funktionen einschließt, wobei sie umfasst:
eine Einheit (117) zum Erfassen von Informationen zum Identifizieren eines Benutzers, die so eingerichtet ist, dass sie Informationen zum Identifizieren und Authentifizieren eines Benutzers erfasst, der die Multifunktionsvorrichtung (100) bedient;
**dadurch gekennzeichnet, dass**
eine Einheit (122) für Begrenzung von Funktionen, die so eingerichtet ist, dass sie Nutzung der Gruppe von Funktionen der Multifunktionsvorrichtung (100) für einen authentifizierten Benutzer auf Basis der erfassten Informationen zum Identifizieren eines Benutzers und Informationen zum Begrenzen von Funktionen begrenzt, die für den authentifizierten Benutzer voreingestellt sind;
wobei die für einen authentifizierten Benutzer voreingestellten Informationen zum Begrenzen von Funktionen eine Liste von Funktionselementen, die mit jeder Funktion in der Gruppe von Funktionen der Multifunktionsvorrichtung (100) verbunden sind, und für jedes Funktionselement in der Liste Informationen einschließen, die für jedes Funktionselement angeben, ob es für den authentifizierten Benutzer zugelassen ist, und eine Begrenzung der Nutzung eines Funktionselementes für den authentifizierten Benutzer festlegen,
die mit der Kopierfunktion verbundenen Funktionselemente Farbkopie, Schwarzweißkopie oder/und Angabe eines Papierfachs einschließen und die mit der Fax-Funktion verbundenen Funktionselemente eine Begrenzung der Anzahl zu übertragender Seiten einschließen,
die mit der Internet-Fax-/E-Mail-Funktion verbundenen Funktionselemente Übertragung an eine interne E-Mail-Adresse und Übertragung an eine externe E-Mail-Adresse einschließen, wobei Zulässigkeit von Übertragung an eine interne E-Mail-Adresse und/oder eine externe E-Mail-Adresse auf Basis der Ziel-E-Mail-Adresse bestimmt wird, und
die Einheit (122) für Begrenzung von Funktionen so eingerichtet ist, dass sie Nutzung einer Funktion der Gruppe von Funktionen für den authentifizierten Benutzer begrenzt, indem sie einen Auftrag, der durch ein Funktionselement ermöglicht wird, das von dem authentifizierten Benutzer ausgewählt wird, gemäß den Informationen zum Begrenzen von Funktionen für den authentifizierten Benutzer in Gang setzt oder untersagt.

2. Multifunktionsvorrichtung (100) nach Anspruch 1, wobei
die Multifunktionsvorrichtung (100) des Weiteren so eingerichtet ist, dass sie einem Server (120; 102), der Informationen zum Begrenzen von Funktionen für Benutzer für jeden registrierten Benutzer speichert, die erfassten Informationen zum Identifizieren eines Benutzers mitteilt und Informationen zum Begrenzen von Funktionen für Benutzer von dem Server (120; 102) auf Basis der erfassten Informationen zum Identifizieren eines Benutzers abruft, und
die Einheit (122) für Begrenzung von Funktionen so eingerichtet ist, dass sie Nutzung der Gruppe von Funktionen der Multifunktionsvorrichtung (100) auf Basis der abgerufenen Informationen zum Begrenzen von Funktionen für Benutzer begrenzt.

3. Multifunktionsvorrichtung (100) nach Anspruch 1 oder 2, wobei die Einheit (117) zum Erfassen von Informationen zum Identifizieren eines Benutzers so eingerichtet ist, dass sie ein elektromagnetisches Wellensignal zu einer von einem Benutzer mitgeführten Karte (200) sendet, und des Weiteren so eingerichtet ist, dass sie mit der Karte (200) kommuniziert, um die Informationen zum Identifizieren des Benutzers zu erfassen, der die Karte (200) mitführt, wenn sich die Karte (200) innerhalb eines Erfassungsbereiches der Einheit (117) zum Erfassen von Informationen zum Identifizieren eines Benutzers befindet.

4. Multifunktionsvorrichtung (100) nach Anspruch 1, die des Weiteren eine Ausgabe-Einheit (116, 124) umfasst, die so eingerichtet ist, dass sie, wenn durch den Benutzer ein Funktionselement ausgewählt wird, dessen Nutzung in den Informationen zum Begrenzen von Funktionen untersagt ist, eine Nachricht ausgibt, die anzeigt, dass Nutzung des Funktionselementes untersagt ist.

5. Verfahren zum Steuern einer Funktion einer Multifunktionsvorrichtung (100) mit einer Gruppe von Funktionen, die Kopier-, Fax- oder/und Internet-Fax/E-Mail-Funktionen einschließt, wobei das Verfahren umfasst:
Erfassen von Informationen zum Identifizieren und Authentifizieren eines Benutzers, der die Multifunktionsvorrichtung (100) bedient;
**gekennzeichnet durch**
Begrenzen von Nutzung der Gruppe von Funktionen der Multifunktionsvorrichtung (100) für einen authentifizierten Benutzer auf Basis der erfassten Informationen zum Identifizieren eines Benutzers und Informationen zum Begrenzen von Funktionen, die für den authentifizierten Benutzer voreingestellt sind;
wobei die für einen authentifizierten Benutzer voreingestellten Informationen zum Begrenzen von Funktionen eine Liste von Funktionselementen, die mit jeder Funktion der Gruppe von Funktionen der Multifunktionsvorrichtung verbunden sind, und für jedes Funktionselement in der Liste Informationen einschließen, die für jedes Funktionselement angeben, ob es für den authentifizierten Benutzer zugelassen ist, und eine Begrenzung der Nutzung eines Funktionselements für den authentifizierten Benutzer festlegen,
wobei die mit der Kopierfunktion verbundenen Funktionselemente Farbkopie, Schwarzweißkopie oder/und Angabe eines Papierfachs einschließen und die mit der Fax-Funktion verbundenen Funktionselemente eine Begrenzung der Anzahl zu übertragender Seiten einschließen,
die mit der Internet-Fax-/E-Mail-Funktion verbundenen Funktionselemente Übertragung an eine interne E-Mail-Adresse und Übertragung an eine externe E-Mail-Adresse einschließen, wobei Zulässigkeit von Übertragung an eine interne E-Mail-Adresse und/oder eine externe E-Mail-Adresse auf Basis der Ziel-E-Mail-Adresse bestimmt wird, und
Begrenzen der Nutzung der Gruppe von Funktionen der Multifunktionsvorrichtung (100) für einen authentifizierten Benutzer einschließt, dass ein Auftrag, der durch ein Funktionselement ermöglicht wird, das von dem authentifizierten Benutzer ausgewählt wird, gemäß den Informationen zum Begrenzen von Funktionen für den authentifizierten Benutzer in Gang gesetzt oder untersagt wird.

6. Verfahren nach Anspruch 5, das des Weiteren umfasst, dass:
einem Server (120; 102), der Informationen zum Begrenzen von Funktionen für Benutzer für jeden registrierten Benutzer speichert, die erfassten Informationen zum Identifizieren eines Benutzers mitgeteilt werden, Informationen zum Begrenzen von Funktionen für Benutzer von dem Server (120; 102) auf Basis der erfassten Informationen zum Identifizieren eines Benutzers abgerufen werden und Nutzung der Gruppe von Funktionen der Multifunktionsvorrichtung (100) auf Basis der abgerufenen Informationen zum Begrenzen von Funktionen für Benutzer begrenzt werden.

7. System, das eine Multifunktionsvorrichtung (100) mit einer Gruppe von Funktionen, die Kopier-, Fax- oder/und Internet-Fax/E-Mail-Funktionen einschließt, sowie eine Karte (200) umfasst, die von einem Benutzer mitgeführt werden kann, wobei die Karte (200) so eingerichtet ist, dass sie Informationen zum Identifizieren und Authentifizieren des Benutzers speichert, der die Karte (200) mitführt, die mittels eines elektromagnetischen Wellensignals gelesen werden können, und
die Multifunktionsvorrichtung (100) umfasst:
eine Einheit (117) zum Erfassen von Informationen zum Identifizieren eines Benutzers, die so eingerichtet ist, dass sie das elektromagnetische Wellensignal zu der Karte (200) sendet, und des Weiteren so eingerichtet ist, dass sie mit der Karte (200) kommuniziert, um die Informationen zum Identifizieren des Benutzers zu erfassen, der die Karte (200) mitführt, wenn sich die Karte (200) innerhalb eines Erfassungsbereiches der Einheit (117) zum Erfassen von Informationen zum Identifizieren eines Benutzers befindet.
**dadurch gekennzeichnet, dass**
die Multifunktionsvorrichtung (100) des Weiteren umfasst:
eine Einheit (122) für Begrenzung von Funktionen, die so eingerichtet ist, dass sie Nutzung der Gruppe von Funktionen der Multifunktionsvorrichtung (100) für einen authentifizierten Benutzer auf Basis der erfassten Informationen zum Identifizieren eines Benutzers und Informationen zum Begrenzen von Funktionen begrenzt, die für den authentifizierten Benutzer voreingestellt sind;
wobei die für einen authentifizierten Benutzer voreingestellten Informationen zum Begrenzen von Funktionen eine Liste von Funktionselementen, die mit jeder Funktion der Gruppe von Funktionen der Multifunktionsvorrichtung verbunden sind, und für jedes Funktionselement in der Liste Informationen einschließen, die für jedes Funktionselement angeben, ob es für den authentifizierten Benutzer zugelassen ist, und eine Begrenzung der Nutzung eines Funktionselements für den authentifizierten Benutzer festlegen,
wobei die mit der Kopierfunktion verbundenen Funktionselemente Farbkopie, Schwarzweißkopie oder/und Angabe eines Papierfachs einschließen und die mit der Fax-Funktion verbundenen Funktionselemente eine Begrenzung der Anzahl zu übertragender Seiten einschließen,
die mit der Internet-Fax-/E-Mail-Funktion verbundenen Funktionselemente Übertragung an eine interne E-Mail-Adresse und Übertragung an eine externe E-Mail-Adresse einschließen, und Zulässigkeit von Übertragung an eine interne E-Mail-Adresse und/oder eine externe E-Mail-Adresse auf Basis der Ziel-E-Mail-Adresse bestimmt wird, und
die Einheit (122) für Begrenzung von Funktionen so eingerichtet ist, dass sie Nutzung einer Funktion der Gruppe von Funktionen für den authentifizierten Benutzer begrenzt, indem sie einen Auftrag, der durch ein Funktionselement ermöglicht wird, das von dem authentifizierten Benutzer ausgewählt wird, gemäß den Informationen zum Begrenzen von Funktionen für den authentifizierten Benutzer in Gang setzt oder untersagt.

8. System nach Anspruch 7, wobei
die Multifunktionsvorrichtung (100) des Weiteren so eingerichtet ist, das sie einem Server (120; 102), der Informationen zum Begrenzen von Funktionen für Benutzer für jeden registrierten Benutzer speichert, die erfassten Informationen zum Identifizieren eines Benutzers mitteilt und Informationen zum Begrenzen von Funktionen für Benutzer von dem Server (120; 102) auf Basis der erfassten Informationen zum Identifizieren eines Benutzers abruft, und
die Einheit (122) für Begrenzung von Funktionen so eingerichtet ist, dass sie Nutzung der Gruppe von Funktionen der Multifunktionsvorrichtung (100) auf Basis der abgerufenen Informationen zum Begrenzen von Funktionen für Benutzer begrenzt.

## Revendications

1. Appareil multifonction (100) ayant un ensemble de fonctions qui inclut au moins une de fonctions de copie, de télécopie et de télécopie/courrier électronique Internet, comprenant :
une unité de récupération d'informations d'identification d'utilisateur (117) qui est adaptée pour récupérer des informations pour identifier et authentifier un utilisateur qui fait fonctionner l'appareil multifonction (100) ;
une unité de limitation de fonctions (122) qui est adaptée pour limiter une utilisation, pour un utilisateur authentifié, de l'ensemble de fonctions de l'appareil multifonction (100) selon les informations d'identification d'utilisateur récupérées et des informations de limitation de fonctions qui sont prédéfinies pour l'utilisateur authentifié **caractérisé par**
dans lequel les informations de limitation de fonctions prédéfinies pour un utilisateur authentifié incluent une liste de fonctions associées à chaque fonction dudit ensemble de fonctions de l'appareil multifonction (100) et, pour chaque fonction dans la liste, des informations établissant que chaque fonction est ou non autorisée pour l'utilisateur authentifié et définissant une limite à l'utilisation d'une fonction pour ledit utilisateur authentifié,
dans lequel les fonctions associées à la fonction de copie incluent au moins une d'une copie couleur, d'une copie monochrome et d'une indication d'un bac de papier, et les fonctions associées à la fonction de télécopie incluent une limite du nombre de pages à transmettre,
dans lequel les fonctions associées à la fonction de télécopie/courrier électronique Internet incluent une transmission à une adresse électronique interne et une transmission à une adresse électronique externe, une admissibilité d'une transmission à une adresse électronique interne et/ou d'une adresse électronique externe étant déterminée selon l'adresse électronique de destination, et
dans lequel l'unité de limitation de fonctions (122) est adaptée pour limiter une utilisation d'une fonction de l'ensemble de fonctions, pour l'utilisateur authentifié, en démarrant ou interdisant une tâche fournie par une fonction, qui est sélectionnée par l'utilisateur authentifié, selon les informations de limitation de fonctions pour l'utilisateur authentifié.

2. L'appareil multifonction (100) de la revendication 1, dans lequel
l'appareil multifonction (100) est adapté en outre pour notifier un serveur (120 ; 102) qui stocke des informations de limitation de fonctions d'un utilisateur pour chaque utilisateur enregistré, des informations d'identification d'utilisateur récupérées et pour extraire des informations de limitation de fonctions d'un utilisateur auprès du serveur (120 ; 102) selon les informations d'identification d'utilisateur récupérées, et
l'unité de limitation de fonctions (122) est adaptée pour limiter une utilisation de l'ensemble de fonctions de l'appareil multifonction (100) selon les informations de limitation de fonction d'un utilisateur récupérées.

3. Le dispositif multifonction (100) selon la revendication 1 ou 2, dans lequel l'unité d'informations d'identification d'utilisateur (117) est adaptée pour transmettre un signal d'onde électromagnétique à une carte (200) portée par un utilisateur et est adaptée en outre pour communiquer avec la carte (200) pour récupérer les informations pour identifier l'utilisateur porteur de la carte (200) lorsque la carte (200) est présente dans une zone de détection de l'unité d'informations d'identification d'utilisateur.

4. Le dispositif multifonction (100) selon la revendication 1, comprenant en outre une unité de sortie (116, 124) qui est adaptée pour générer en sortie, lorsqu'une fonction dont l'utilisation est interdite dans les informations de limitation de fonctions est sélectionnée par l'utilisateur, un message indiquant que l'utilisation de la fonction est interdite.

5. Procédé e contrôle d'une fonction d'un appareil multifonction (100) ayant un ensemble de fonctions qui inclut au moins une de fonctions de copie, de télécopie, et de télécopie de courrier électronique Internet, le procédé comprenant :
récupération d'informations pour identifier et authentifier un utilisateur qui fait fonctionner l'appareil multifonction (100) ;
limitation d'une utilisation, pour un utilisateur authentifié, de l'ensemble de fonctions de l'appareil multifonction (100) selon les informations d'identification d'utilisateur récupérées et des informations de limitation de fonctions qui sont prédéfinies pour l'utilisateur authentifié **caractérisé par**
dans lequel les informations de limitation de fonctions prédéfinies pour un utilisateur authentifié incluent une liste de fonctions associées à chaque fonction dudit ensemble de fonctions de l'appareil multifonction et, pour chaque fonction dans la liste, des informations établissant que chaque fonction est ou non autorisée pour l'utilisateur authentifié et définissant une limite à l'utilisation d'une fonction pour ledit utilisateur authentifié,
dans lequel les fonctions associées à la fonction de copie incluent au moins une d'une copie couleur, d'une copie monochrome et d'une indication d'un bac de papier, et les fonctions associées à la fonction de télécopie incluent une limite du nombre de pages à transmettre,
dans lequel les fonctions associées à la fonction de télécopie/courrier électronique Internet incluent une transmission à une adresse électronique interne et une transmission à une adresse électronique externe, une admissibilité d'une transmission à une adresse électronique interne et/ou d'une adresse électronique externe étant déterminée selon l'adresse électronique de destination, et
dans lequel une limitation de l'utilisation, pour un utilisateur authentifié, de l'ensemble de fonctions de l'appareil multifonction (100) inclut un démarrage ou une interdiction d'une tâche fournie par une fonction, qui est sélectionnée par l'utilisateur authentifié, selon les informations de limitation de fonctions pour l'utilisateur authentifié.

6. Le procédé selon la revendication 5, comprenant en outre :
une notification d'un serveur (120 ; 102) qui stocke des informations de limitation de fonctions d'un utilisateur pour chaque utilisateur enregistré, des informations d'identification d'utilisateur récupérées, une récupération d'informations de limitation de fonction d'un utilisateur auprès du serveur (120 ; 102) selon les informations d'identification d'utilisateur récupérées, et une limitation d'une utilisation de l'ensemble de fonctions de l'appareil multifonction (100) selon les informations de limitation de fonctions d'un utilisateur récupérées.

7. Système comprenant un appareil multifonction (100) ayant un ensemble de fonctions qui inclut au moins une de fonctions de copie, de télécopie et de télécopie/courrier électronique Internet et une carte (200) portable par un utilisateur, dans lequel
la carte (200) est adaptée pour stocker des informations d'identification et d'authentification de l'utilisateur porteur de la carte (200) par lecture par un signal d'onde électromagnétique, et
l'appareil multifonction (100) comprend :
une unité de récupération d'informations d'identification d'utilisateur (117) qui est adaptée pour transmettre le signal d'onde électromagnétique à la carte (200) et est adaptée en outre pour communiquer avec la carte (200) pour acquérir les informations pour identifier l'utilisateur porteur de la carte (200) lorsque la carte (200) est présente dans une zone de détection de l'unité d'informations d'identification d'utilisateur (117) ;
l'appareil multifonction (100) comprend en outre :
une unité de limitation de fonctions (122) qui est adaptée pour limiter une utilisation, pour un utilisateur authentifié, de l'ensemble de fonctions de l'appareil multifonction (100) selon les informations d'identification d'utilisateur récupérées et des informations de limitation de fonctions qui sont prédéfinies pour l'utilisateur authentifié ;
**caractérisé en ce que**
les informations de limitation de fonctions prédéfinies pour un utilisateur authentifié incluent une liste de fonctions associées à chaque fonction dudit ensemble de fonctions de l'appareil multifonction (100) et, pour chaque fonction dans la liste, des informations établissant que chaque fonction est ou non autorisée pour l'utilisateur authentifié et définissant une limite à l'utilisation d'une fonction pour ledit utilisateur authentifié,
dans lequel les fonctions associées à la fonction de copie incluent au moins une d'une copie couleur, d'une copie monochrome et d'une indication d'un bac de papier, et les fonctions associées à la fonction de télécopie incluent une limite du nombre de pages à transmettre,
dans lequel les fonctions associées à la fonction de télécopie/courrier électronique Internet incluent une transmission à une adresse électronique interne et une transmission à une adresse électronique externe, une admissibilité d'une transmission à une adresse électronique interne et/ou d'une adresse électronique externe étant déterminée selon l'adresse électronique de destination, et
dans lequel l'unité de limitation de fonctions (122) est adaptée pour limiter une utilisation d'une fonction de l'ensemble de fonctions, pour l'utilisateur authentifié, en démarrant ou interdisant une tâche fournie par une fonction, qui est sélectionnée par l'utilisateur authentifié, selon les informations de limitation de fonctions pour l'utilisateur authentifié.

8. Le système selon la revendication 7, dans lequel
l'appareil multifonction (100) est adapté en outre pour notifier un serveur (120 ; 102) qui stocke des informations de limitation de fonctions d'un utilisateur pour chaque utilisateur enregistré, des informations d'identification d'utilisateur récupérées et pour extraire des informations de limitation de fonctions d'un utilisateur auprès du serveur (120 ; 102) selon les informations d'identification d'utilisateur récupérées, et
l'unité de limitation de fonctions (122) est adaptée pour limiter une utilisation de l'ensemble de fonctions de l'appareil multifonction (100) selon les informations de limitation de fonction d'un utilisateur récupérées.
